# EUROPÄISCHE PATENTSCHRIFT

(11) **EP 1 785 335 B1**
(45) Veröffentlichungstag und Bekanntmachung des Hinweises auf die Patenterteilung: **12.01.2011**
(21) Anmeldenummer: 05110594.8
(22) Anmeldetag: 10.11.2005
(51) Int. Cl.: B62D 7/18, B60G 7/00, B60G 13/00

(54) **Gelenkverbindung zum Übertragen einer Lenkbewegung auf ein Rad eines Fahrzeuges**
Articulated link for transferring a steering movement onto a vehicle wheel
Assemblage articulé destiné à la transmission d'un mouvement de direction sur la roue d'un véhicule

(43) Veröffentlichungstag der Anmeldung: 16.05.2007
(73) Patentinhaber: Ford Global Technologies, LLC, Dearborn, MI 48126 (US)
(72) Erfinder: Halfmann, Edmund, 41468 Neuss (DE); Simon, Marc, 50735 Köln (DE)
(74) Vertreter: Drömer, Hans-Carsten

(56) Entgegenhaltungen:
- EP-A- 1 075 999
- DE-A1- 10 108 499
- FR-A- 2 843 086
- GB-A- 276 781
- US-A- 2 771 302
- US-A- 4 458 915
- US-A- 4 761 019
- US-A- 5 188 382
- US-B1- 6 419 250
- PATENT ABSTRACTS OF JAPAN Bd. 1999, Nr. 13, 30. November 1999 (1999-11-30) & JP 11 208501 A (SUZUKI MOTOR CORP), 3. August 1999 (1999-08-03)
- PATENT ABSTRACTS OF JAPAN Bd. 015, Nr. 142 (M-1101), 10. April 1991 (1991-04-10) -& JP 03 021566 A (MITSUBISHI AUTOMOB ENG CO LTD; others: 01), 30. Januar 1991 (1991-01-30)
- PATENT ABSTRACTS OF JAPAN Bd. 009, Nr. 301 (C-316), 28. November 1985 (1985-11-28) -& JP 60 138049 A (HITACHI KINZOKU KK; others: 01), 22. Juli 1985 (1985-07-22)

## Beschreibung

Die Erfindung betrifft eine Gelenkverbindung zum Übertragen einer Lenkbewegung auf ein Rad eines Fahrzeuges, mit einer Gelenkeinrichtung zum Befestigen des Rades und einem Lenkhebel, der mit der Gelenkeinrichtung verbunden ist und ausgebildet ist, um die zu übertragende Lenkbewegung aufzunehmen und auf die Gelenkeinrichtung zu übertragen.

Die Zusammenfassung der JP 11 208501 befasst sich mit einem Lenkhebel, dessen Steifigkeit erhöht werden soll. Der Lenkhebel ist mit einer Gelenkeinrichtung verbunden, wobei der Lenkhebel eine Lenkbewegung aufnimmt und an die Gelenkeinrichtung überträgt.

Die US 6,419,250 B1 offenbart eine einteilige Gelenkverbindung mit einer Gelenkeinrichtung und einem Lenkhebel. Die einteilige Gelenkverbindung ist aus einem Stahlknüppel geschmiedet, um Montagekosten bzw. -zeit aufgrund des Wegfalls von Verbindungspunkten einzusparen.

Die DE 101 08 499 A1 befasst sich mit einem Verfahren und einer Konstruktion zum Ersetzen des Schwenklagers an Rädern, wobei der Flansch des Radlagers verwendet wird. Der Lenkarm wird ersetzt durch ein anzuschraubendes Bauteil.

Bei der Entwicklung von Vorderradaufhängungen für Fahrzeuge, wie beispielsweise MacPherson Vorderradaufhängungen, liegt ein Hauptproblem im Finden eines geeigneten Kompromisses zwischen Agilität und Stabilität. Dabei soll bei geringer Fahrzeuggeschwindigkeit eine hohe Agilität und bei hoher Geschwindigkeit eine hohe Stabilität gewährleistet sein. Für gewöhnlich wird dies im Hinblick auf die Agilität durch niedrige Lenkübersetzungen und im Hinblick auf die Stabilität durch erhöhte Untersteuertendenz erreicht. Bei Autos mit Vorderradantrieb ist das Lenkgetriebe üblicherweise hinter dem Mittelpunkt des Vorderrades platziert. In einem solchen Fall ist das Potenzial zum Untersteuern begrenzt.

Heutige Lösungen zur Erzielung einer größeren Untersteuertendenz basieren auf einer Verwendung sehr weicher Hülsen zwischen Lenkgetriebe und Hilfsrahmen oder so genannter nachgiebiger Spurstangenhülsen. Beide Lösungen basieren auf Gummiteilen die dem Lenksystem eine Hysterese hinzufügen, die das "on center" Lenkverhalten verschlechtert.

Aus der US 4,458,915 ist eine Radaufhängung bekannt, die dem Rad eine gewisse freie Beweglichkeit einräumt, um auf diese Weise eine Übertragung von Schwingungen des Rades auf das Fahrzeug zu vermeiden. Dazu ist neben dem eigentlichen Lenkmechanismus ein zusätzliches, aufwändig zu realisierendes Ausgleichsteil erforderlich.

Aufgabe der vorliegenden Erfindung ist es daher, eine Gelenkverbindung zum Übertragen einer Lenkbewegung auf ein Rad eines Fahrzeuges vorzuschlagen, die ein verbessertes Lenkverhalten eines Fahrzeuges ermöglicht.

Erfindungsgemäß wird die Aufgabe durch eine Gelenkverbindung mit den Merkmalen des Anspruchs 1 gelöst, wobei die Gelenkverbindung zum Übertragen einer Lenkbewegung auf ein Rad eines Fahrzeugs eine Gelenkeinrichtung zum Befestigen des Rades und einen Lenkhebel umfaßt, der mit der Gelenkeinrichtung verbunden ist und ausgebildet ist, um die zu übertragende Lenkbewegung aufzunehmen und auf die Gelenkeinrichtung zu übertragen, wobei der Lenkhebel der Gelenkverbindung aus einem nachgiebigen Material besteht. Die Gelenkverbindung eignet sich als vordere Gelenkverbindung einer Radaufhängung eines Fahrzeuges. Bei der Radaufhängung kann es sich um eine MacPherson Vorderradaufhängung handeln. Dabei kann der Lenkhebel ausgebildet sein, um eine auf das Rad des Fahrzeuges zu übertragende Lenkbewegung aufnehmen und auf die Gelenkeinrichtung zu übertragen. Ist an der Gelenkeinrichtung das Rad montiert, so führt dieses zusammen mit der Gelenkeinrichtung die Lenkbewegung aus.

Der erfindungsgemäße Ansatz besteht also darin, den Lenkhebel der Gelenkverbindung nachgiebig zu gestalten. Dies führt zu einer Biegung des Lenkhebels unter Querkraft und mehr Untersteuern. Querkräfte treten beispielsweise beim Kurven fahren auf. Die Nachgiebigkeit des Lenkhebels ist dabei so gewählt, daß trotz einer Durchbiegung des Lenkhebels unter Querkraft eine exakte Lenkung gewährleistet ist.

Durch den erfindungsgemäßen Ansatz einer nachgiebigen bzw. ausgleichenden Gelenkverbindung, läßt sich die Untersteuerungstendenz von Fahrzeugen verbessern. Dies erhöht die Stabilität des Lenkverhaltens. Der erfindungsgemäße Ansatz erleichtert somit das Finden eines geeigneten Kompromisses zwischen Agilität und Stabilität einer Lenkverbindung.

Ein wesentlicher Vorteil des erfindungsgemäßen Ansatzes besteht darin, daß sich die erzielbare höhere Untersteuertendenz, beispielsweise bei Fahrzeugen mit Vorderradantrieb, mittels einer sehr einfachen, kosteneffektiven Lösung realisieren läßt.

Üblicherweise ist die Gelenkeinrichtung aus einem spröden Material wie Gußeisen gefertigt. Ein solches sprödes Material kann keinen hohen Belastungen ausgesetzt werden. Daher kann es erforderlich sein, den Lenkhebel als separates Teil auszuführen, der mit der Gelenkeinrichtung verbunden werden kann. Indem der Lenkhebel aus einem anderen Material als die Gelenkverbindung gefertigt wird, kann für den Lenkhebel ein geeignetes nachgiebiges oder biegsames Material verwendet werden. Die Gelenkeinrichtung kann dagegen wie bisher üblich aus einem spröden Material bestehen. Dies ist vorteilhaft, da auf diese Weise herkömmliche Gelenkeinrichtungen zusammen mit dem erfindungsgemäßen nachgiebigen Lenkhebel eingesetzt werden können.

Für den Lenkhebel können Materialien eingesetzt werden, die hohe nachgiebige Eigenschaften aufweisen. Sie sollten jedoch keine Hystereseeigenschaften aufweisen. Beispielsweise können Metalle eingesetzt werden. Wenn eine größere Beweglichkeit erforderlich ist, kann beispielsweise ein Stück Federstahl als Lenkhebel verwendet werden. Federstahl hat den Vorteil, daß er eine starke Durchbiegung des Lenkhebels ermöglicht. Trotz der Nachgiebigkeit des Lenkhebels wird ein gutes "on center" Lenkverhalten ermöglicht, da der nachgiebige Lenkhebel keine Hystereseeigenschaft in den Lenkmechanismus einbringt.

Der Lenkhebel kann direkt mit der Gelenkeinrichtung verbunden sein. Gemäß einer Ausgestaltung weist der Lenkhebel Stifte und die Gelenkeinrichtung entsprechende Ausnehmungen auf, in die die Stifte eingreifen können. Dies ermöglicht eine einfache Montage der beiden Teile und führt zu einer starren Verbindung.

Weitere vorteilhafte Ausgestaltungen der Erfindung sind in den Unteransprüchen und in der folgenden Figurenbeschreibung offenbart. Es zeigen:
- Fig. 1: eine schematische Darstellung einer Gelenkverbindung gemäß einem Ausführungsbeispiel der vorliegenden Erfindung; und
- Fig. 2: eine Darstellung einer Gelenkverbindung gemäß einem weiteren Ausführungsbeispiel der vorliegenden Erfindung.

In den unterschiedlichen Figuren sind gleiche Teile stets mit denselben Bezugszeichen versehen, weswegen diese in der Regel auch nur einmal beschrieben werden.

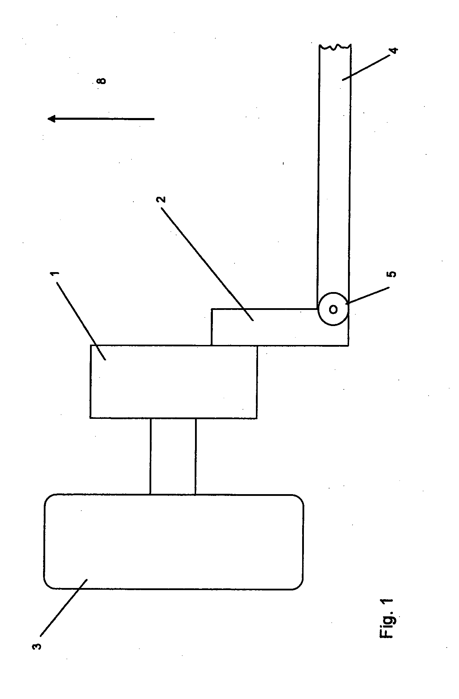

Fig. 1 zeigt eine schematische Darstellung eines Teils einer Vorderradaufhängung eines Fahrzeuges in Draufsicht. Die Vorderradaufhängung weist eine nachgiebige Gelenkverbindung gemäß einem Ausführungsbeispiel der vorliegenden Erfindung auf.

Die Gelenkverbindung weist eine Gelenkeinrichtung 1 und einen Lenkhebel 2 auf. Der Lenkhebel 2 ist mit der Gelenkeinrichtung 1 fest verbunden. Die Gelenkeinrichtung 1 ist so ausgebildet, daß ein Rad 3 des Fahrzeuges rotierbar montiert werden kann. Der Lenkhebel 2 kann mit einem Lenkgestänge 4 des Fahrzeugs beweglich verbunden sein. Die Verbindung zwischen Lenkhebel 2 und Lenkgestänge 4 kann durch eine Aufnahmeeinrichtung 5 realisiert sein. Die Aufnahmeeinrichtung 5 ist ausgebildet, um eine Lenkbewegung von dem Lenkgestänge 4 auf den Lenkhebel 2 zu übertragen. Eine Fahrzeugfront ist mittels des Pfeils 8 angedeutet.

Wird ein Lenkrad (nicht gezeigt in den Figuren) des Fahrzeuges gedreht, so wird die Lenkbewegung über einen Lenkmechanismus (nicht gezeigt in den Figuren) auf das Lenkgestänge 4 übertragen. Die Lenkbewegung führt dazu, daß das Lenkgestänge 4 zu dem Lenkhebel 2 hin bzw. von diesem weg bewegt wird. Durch diese Bewegung des Lenkgestänges 4 wird die Lenkbewegung über die Aufnahmeeinrichtung 5 auf den Lenkhebel 2 übertragen. Indem die Aufnahmeeinrichtung 5 eine bewegliche Verbindung zwischen Lenkgestänge 4 und Lenkhebel 2 realisiert, kann die Bewegung des Lenkgestänges 4 zu einer Drehbewegung des Lenkhebels 2 führen. Die Drehbewegung resultiert daraus, daß das Lenkgestänge 4 seitlich auf den Lenkhebel 2 drückt bzw. zieht. Dadurch daß der Lenkhebel 2 fest mit der Gelenkeinrichtung 1 verbunden ist, führt die Drehbewegung des Lenkhebels 2 ebenfalls zu einer Drehbewegung der Gelenkeinrichtung 1. Von der Gelenkeinrichtung 1 wird die Drehbewegung wiederum auf das montierte Rad 3 des Fahrzeuges übertragen. Auf diese Weise wird die Lenkbewegung von dem Lenkrad des Fahrzeuges über die erfindungsgemäße Lenkverbindung auf das Rad 3 des Fahrzeuges übertragen.

Gemäß diesem Ausführungsbeispiel sind die Gelenkeinrichtung 1 und der Lenkhebel 2 als eigenständige Teile ausgeführt. Der Lenkhebel 2 ist über eine starre Verbindung an der Gelenkeinrichtung 1 befestigt. Gemäß dem erfindungsgemäßen Ansatz besteht der Lenkhebel 2 aus einem nachgiebigen Material. Dabei kann es sich beispielsweise um ein Metall handeln. Um eine hohe Biegsamkeit zu gewährleisten kann der Lenkhebel 2 aus Federstahl gefertigt sein. Die Gelenkeinrichtung 1 kann aus einem starren Material, wie beispielsweise Gußeisen gefertigt sein.

Die Nachgiebigkeit des Lenkhebels 2 führt zu einer Verbiegung des Lenkhebels 2 unter Querkraft, wie sei beispielsweise beim Kurven fahren auftreten. Durch eine solche Querkraft wirkt eine Kraft von dem Rad 3 über die Gelenkeinrichtung 1 seitlich auf ein erstes Ende des Lenkhebels 2. Eine Gegenkraft wird durch das Lenkgestänge 4 hervorgerufen, das mit dem, dem ersten Ende, gegenüberliegenden zweiten Ende des Lenkhebels 2 verbunden ist. Die Verbindung zwischen Lenkhebel 2 und Lenkgestänge 4 bildet einen Winkel. Gemäß diesem Ausführungsbeispiel treffen Lenkhebel 2 und Lenkgestänge 4 rechtwinklig aufeinander. Die lateralen Kräfte bzw. Querkräfte führen auf Grund der Nachgiebigkeit des Lenkhebels 2 zu einer Verbiegung desselben. Die Höhe der Nachgiebigkeit und damit die Stärke der Verbiegung kann durch eine geeignete Materialauswahl sowie eine geeignete Formgebung des Lenkhebels 2 eingestellt werden. Auf diese Weise kann das Untersteuerverhalten bzw. die Untersteuertendenz der Lenkung des Fahrzeugs an die jeweiligen Erfordernisse angepaßt werden.

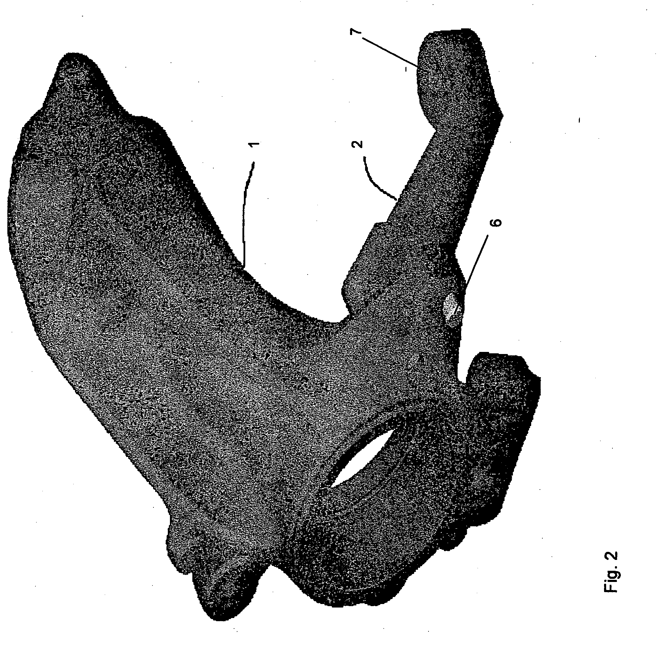

Fig. 2 zeigt eine detaillierte Darstellung der in Fig. 1 beschriebenen flexiblen Gelenkverbindung bestehend aus der Gelenkeinrichtung 1, an der der Lenkhebel 2 befestigt ist.

Bei der Gelenkeinrichtung 1 kann es sich im Wesentlichen um eine Gelenkeinrichtung handeln, wie sie beispielsweise in Verbindung mit MacPherson Vorderradaufhängungen verwendet wird. Gemäß diesem Ausführungsbeispiel weist die Gelenkeinrichtung 1 zusätzlich eine Verbindungseinrichtung auf, die es ermöglicht, den Lenkhebel 2 an der Gelenkeinrichtung 1 zu befestigen.

Die Verbindungseinrichtung besteht auf Seiten der Gelenkeinrichtung 1 aus zwei Ausnehmungen. Die Ausnehmungen sind als durchgehende Löcher realisiert. Die Löcher können sich beide auf Höhe der Radachse des Fahrzeuges befinden. Bei einem Fahrzeug mit Vorderradantrieb, üblicherweise hinter dem Mittelpunkt des Vorderrades.

Auf Seiten des Lenkhebels 2 besteht die Verbindungseinrichtung aus zwei Ausformungen, die so an dem Lenkhebel 2 angeordnet sind, daß sie in die Ausnehmungen der Gelenkeinrichtung eingreifen können und somit eine starre Verbindung zwischen Lenkhebel 2 und Gelenkeinrichtung 1 ermöglichen. Gemäß diesem Ausführungsbeispiel sind die Ausformungen als Stifte 6 realisiert.

Der Lenkhebel 2 ist als längliche Platte realisiert. Die Dicke der Platte kann in Verbindung mit dem verwendeten Material so gewählt werden, daß eine erwünschte Biegsamkeit des Lenkhebels 2 gewährleistet ist. Verstärkungselemente, beispielsweise im Bereich der Verbindungseinrichtung können die Biegeeigenschaften zusätzlich auf ein gewünschtes Maß einstellen. Ist der Lenkhebel 2 mit der Gelenkeinrichtung 1 verbunden, so befindet sich die Längsachse des Lenkhebels 2, gemäß diesem Ausführungsbeispiel, in etwa auf Höhe der Radachse und erstreckt sich rechtwinklig von dieser weg. Alternativ kann der Lenkhebel 2 an anderen geeigneten Stellen mit der Gelenkeinrichtung 1 verbunden sein. Der Lenkhebel 2 verjüngt sich in Richtung seiner Längsachse von der Seite der Verbindung mit der Gelenkeinrichtung 1 her.

Auf der, der Radachse abgewandten Seite des Lenkhebels 2 weist der Lenkhebel 2 die Aufnahmeeinrichtung auf, die eine Verbindung zwischen dem Lenkhebel 2 und dem in Fig. 1 gezeigten Lenkgestänge 4 ermöglicht. Gemäß diesem Ausführungsbeispiel ist die Aufnahmeeinrichtung 5 als Verstärkung des Lenkhebels 2 auf Seiten des Lenkgestänges 4 realisiert. Die Verstärkung weist ein vertikales Durchgangsloch 7 auf, in das das Lenkgestänge 4 eingreifen kann, um die Lenkbewegung auf den Lenkhebel 2 zu übertragen.

Nähere Details bezüglich einer möglichen Formgebung der Gelenkeinrichtung 1 sowie des Lenkhebels 2 können der Fig. 2 entnommen werden.

Die gezeigten Ausführungsbeispiele des Lenkhebels und der Gelenkeinrichtung sind nur beispielhaft gewählt. Es können andere Ausformungen sowohl des Lenkhebels als auch der Gelenkverbindung gewählt werden. Auch kann die Verbindung zwischen Lenkhebel und Gelenkverbindung durch andere lösbare oder feste Verbindungen realisiert werden.

Alternativ zu den gezeigten Ausführungsbeispielen könnten die Gelenkeinrichtung und der Lenkhebel auch aus einem Stück gefertigt sein, wobei der Bereich des Lenkhebels so ausgeführt ist, daß die erfindungsgemäß erforderliche Nachgiebigkeit gewährleistet ist. Dies könnte beispielsweise durch eine besondere Auswahl des Materials, eine entsprechende Verarbeitung oder Formgebung des Bereichs des Lenkhebels oder durch eine Kombination unterschiedlicher Materialien für die Bereiche des Lenkhebels und der Gelenkeinrichtung erreicht werden.

## Patentansprüche

1. Gelenkverbindung zum Übertragen einer Lenkbewegung auf ein Rad (3) eines Fahrzeuges, aufweisend eine Gelenkeinrichtung (1) zum Befestigen des Rades (3); einen Lenkhebel (2), der mit der Gelenkeinrichtung (1) verbunden ist und ausgebildet ist, um die zu übertragende Lenkbewegung aufzunehmen und auf die Gelenkeinrichtung (1) zu übertragen,
**dadurch gekennzeichnet, daß**
der Lenkhebel (2) aus einem nachgiebigen bzw. biegsamen Material besteht, wobei die Gelenkeinrichtung (1) aus einem anderen Material als der Lenkhebel (2) besteht, und wobei das Material des Lenkhebels (2) nachgiebiger als das Material der Gelenkeinrichtung (1) ist.

2. Gelenkverbindung Anspruch 1,
**dadurch gekennzeichnet, daß**
der Lenkhebel (2) an einem, der Gelenkeinrichtung (1) gegenüberliegenden Ende, eine Aufnahmeeinrichtung (5) zur Aufnahme der zu übertragenden Lenkbewegung aufweist und ausgebildet ist, um sich unter lateralen Lasten, die über die Gelenkeinrichtung (1) oder die Aufnahmeeinrichtung (5) einwirken, zu verbiegen.

3. Gelenkverbindung nach Anspruch 1 oder 2,
**dadurch gekennzeichnet, daß**
der Lenkhebel (2) aus Metall ist.

4. Gelenkverbindung nach einem der vorhergehenden Ansprüche,
**dadurch gekennzeichnet, daß**
der Lenkhebel (2) aus Federstahl ist.

5. Gelenkverbindung nach einem der vorhergehenden Ansprüche,
**dadurch gekennzeichnet, daß**
der Lenkhebel (2) starr mit der Gelenkeinrichtung (1) verbunden ist.

6. Gelenkverbindung nach einem der vorhergehenden Ansprüche,
**dadurch gekennzeichnet, daß**
der Lenkhebel (2) mindestens zwei Stifte und die Gelenkeinrichtung (1) mindestens zwei Ausnehmungen aufweist, und wobei der Lenkhebel (2) durch ein Eingreifen der Stifte in die Ausnehmungen mit der Gelenkeinrichtung (1) verbunden ist.

7. Gelenkverbindung nach einem der vorhergehenden Ansprüche,
**dadurch gekennzeichnet, daß**
die Aufnahmeeinrichtung (5) ausgebildet ist, um den Lenkhebel (2) mit einem Lenkgestänge (4) zu verbinden.

8. Gelenkverbindung nach einem der vorhergehenden Ansprüche,
**dadurch gekennzeichnet, daß**
die Gelenkeinrichtung (1) Teil einer Radaufhängung des Fahrzeugs ist.

## Claims

1. Articulated connection for transmitting a steering movement to a wheel (3) of a vehicle, having an articulation device (1) for the securing of the wheel (3); a steering arm (2) which is connected to the articulation device (1) and is designed in order to receive the steering movement to be transmitted and to transmit it to the articulation device (1), **characterized in that** the steering arm (2) is composed of a flexible or pliable material, the articulation device (1) being composed of a different material than the steering arm (2), and the material of the steering arm (2) being more flexible than the material of the articulation device (1).

2. Articulated connection according to Claim 1, **characterized in that**, at an end lying opposite the articulation device (1), the steering arm (2) has a receiving device (5) for receiving the steering movement to be transmitted and is designed in order to bend under lateral loads which act via the articulation device (1) or the receiving device (5).

3. Articulated connection according to Claim 1 or 2, **characterized in that** the steering arm (2) is made from metal.

4. Articulated connection according to one of the preceding claims, **characterized in that** the steering arm (2) is made from spring steel.

5. Articulated connection according to one of the preceding claims, **characterized in that** the steering arm (2) is connected rigidly to the articulation device (1) .

6. Articulated connection according to one of the preceding claims, **characterized in that** the steering arm (2) has at least two pins and the articulation device (1) has at least two recesses, and the steering arm (2) is connected to the articulation device (1) by engagement of the pins in the recesses.

7. Articulated connection according to one of the preceding claims, **characterized in that** the receiving device (5) is designed in order to connect the steering arm (2) to a steering linkage (4).

8. Articulated connection according to one of the preceding claims, **characterized in that** the articulation device (1) is part of a wheel-suspension system of the vehicle.

## Revendications

1. Assemblage articulé pour la transmission d'un mouvement de direction sur la roue (3) d'un véhicule, présentant un dispositif d'articulation (1) pour la fixation de la roue (3) ; un levier de direction (2) qui est connecté au dispositif d'articulation (1) et qui est réalisé afin de recevoir le mouvement de direction à transmettre et de le transmettre au dispositif d'articulation (1),
**caractérisé en ce que**
le levier de direction (2) se compose d'un matériau flexible ou souple, le dispositif d'articulation (1) se composant d'un matériau différent de celui du levier de direction (2), et le matériau du levier de direction (2) étant plus flexible que le matériau du dispositif d'articulation (1).

2. Assemblage articulé selon la revendication 1,
**caractérisé en ce que**
le levier de direction (2), à une extrémité opposée au dispositif d'articulation (1), présente un dispositif de réception (5) pour recevoir le mouvement de direction à transmettre et est réalisé de manière à fléchir sous l'effet de charges latérales, qui agissent sur le dispositif d'articulation (1) ou sur le dispositif de réception (5).

3. Assemblage articulé selon la revendication 1 ou 2,
**caractérisé en ce que**
le levier de direction (2) est en métal.

4. Assemblage articulé selon l'une quelconque des revendications précédentes,
**caractérisé en ce que**
le levier de direction (2) est en acier à ressort.

5. Assemblage articulé selon l'une quelconque des revendications précédentes,
**caractérisé en ce que**
le levier de direction (2) est connecté rigidement au dispositif d'articulation (1).

6. Assemblage articulé selon l'une quelconque des revendications précédentes,
**caractérisé en ce que**
le levier de direction (2) présente au moins deux goupilles et le dispositif d'articulation (1) présente au moins deux évidements, et le levier de direction (2) est connecté au dispositif d'articulation (1) par un engagement des goupilles dans les évidements.

7. Assemblage articulé selon l'une quelconque des revendications précédentes,
**caractérisé en ce que**
le dispositif de réception (5) est réalisé de manière à relier le levier de direction (2) à une tringlerie de direction (4).

8. Assemblage articulé selon l'une quelconque des revendications précédentes,
**caractérisé en ce que**
le dispositif d'articulation (1) fait partie d'une suspension des roues du véhicule.
